# EUROPÄISCHE PATENTSCHRIFT

(11) **EP 3 008 787 B1**
(45) Veröffentlichungstag und Bekanntmachung des Hinweises auf die Patenterteilung: **10.07.2019**
(21) Anmeldenummer: 14724306.7
(22) Anmeldetag: 05.05.2014
(51) Int. Cl.: H02J 3/38, H02M 7/04, H02M 7/44, H02J 7/35

(54) **LADESYSTEM MIT AKKUMULATOR, VERWENDUNG EINES MPP-TRACKING-VERFAHRENS ZUM LADEN EINES AKKUMULATORS UND VERFAHREN ZUM LADEN EINES AKKUMULATORS MITTELS EINES LADESYSTEMS**
CHARGING SYSTEM AND METHOD FOR CHARGING WITH ACCUMULATOR, USE OF MPP-TRACKING FOR CHARGING OF AN ACCUMULATOR
SYSTÈME DE CHARGE ET PROCÉDÉ D'UN ACCUMULATEUR, POURSUITE DU POINT DE PUISSANCE MAXIMALE POUR CHARGER UN ACCUMULATEUR

(30) Priorität: 12.06.2013 DE 102013009808
(43) Veröffentlichungstag der Anmeldung: 20.04.2016
(73) Patentinhaber: SEW-EURODRIVE GmbH & Co. KG, 76646 Bruchsal (DE)
(72) Erfinder: BUDZEN, Harald, 76829 Landau (DE)
(86) Internationale Anmeldenummer: PCT/EP2014/001190
(87) Internationale Veröffentlichungsnummer: WO 2014/198362

(56) Entgegenhaltungen:
- WO-A1-2013/136852
- DE-A1-102011 107 269
- JP-A- 2003 009 537
- US-A1- 2011 043 160
- US-A1- 2011 227 525

## Beschreibung

Die Erfindung betrifft ein Verfahren zum Laden eines Akkumulators mittels eines Ladesystems.

Es ist allgemein bekannt, dass bei Photovoltaikanlagen mittels Solarmodulen eine Gleichspannung zur Verfügung stellbar ist. Zur Pufferung der so dargestellten Energiequelle ist ein Akkumulator einsetzbar, wobei beim Laden eines Akkumulators ein Ladegerät verwendbar ist.

**Aus der** WO 2013/136852 A1 **ist ein Laderegler bekannt, wobei die eingangsseitige Spannung für den Gleichrichter vorgegeben wird, die dann vom Wechselrichter dem Gleichrichter übergeben werden muss.**

**Aus der** DE 10 2011 107269 A1 **ist ein Verfahren zum solargestützten Laden einer Batterie bekannt.**

**Aus der** JP 2003 009 537 A **ist ein Leistungsumrichter bekannt.**

**Aus der** US 2011/227525 A1 **ist ein Ladesystem bekannt.**

**Aus der** US 2011 / 0043160 A1 **ist als nächstliegender Stand der Technik ein System mit wechselspannungsseitig verbundenen Modulen bekannt.**

Der Erfindung liegt daher die Aufgabe zugrunde, ein Energiespeichersystem weiterzubilden.

**Erfindungsgemäß wird die Aufgabe bei dem Verfahren nach den in Anspruch 1 angegebenen Merkmalen gelöst.**

Wichtige Merkmale **bei einem Ladesystem mit Akkumulator zur Durchführung eines erfindungsgemäßen Verfahrens** sind, dass das Ladesystem eine Spannungsquelle, einen Umrichter und einen Gleichrichter aufweist,
**wobei** der von der Spannungsquelle gelieferte und/oder getriebene Strom dem gleichspannungsseitigen Anschluss eines Wechselrichters zugeführt wird,
wobei der Wechselrichter pulsweitenmoduliert ansteuerbare Halbleiterschalter zur Erzeugung einer ausgangsseitigen Wechselspannung aufweist,
wobei die ausgangsseitige Wechselspannung einen Gleichrichter speist, dessen ausgangsseitige, insbesondere gleichgerichtete, Spannung als Ladespannung für den Akkumulator fungiert und/oder wirkt,
wobei ein Mittel zur Erfassung des Ausgangsstroms des Wechselrichters im Umrichter angeordnet ist, insbesondere wobei der Effektivwert des Ausgangsstroms dem Ladestrom des Umrichters entspricht,
**wobei die ausgangsseitigen Wechselspannung als Stellgröße dem Regler bekannt gemacht ist, insbesondere direkt oder indirekt erfasst wird,**
**wobei ein Strombegrenzungsmittel des Umrichters den Ausgangsstrom des Wechselrichters auf einen Strombegrenzungswert begrenzt, dass die Ladeleistung, also das Produkt aus Ladespannung und Ladestrom, auf einen Maximalwert hin geregelt wird,**
insbesondere wobei ein Strombegrenzungsmittel des Umrichters den Ausgangsstrom des Wechselrichters auf einen Stromwert begrenzt und ein MPP-Tracker der Signalelektronik des Umrichters diesen Stromwert derart stellt, dass die Ladeleistung, also das Produkt aus Ladespannung und Ladestrom, auf einen Maximalwert hingeregelt wird.

Von Vorteil ist dabei, dass ein industrieüblicher Antriebsumrichter, insbesondere spannungsgeführter Umrichter zur Speisung eines Drehstrommotors, verwendbar ist als Laderegelgerät für den Akkumulator. Denn die Ausgangsspannung des Umrichters wird auf den als Ladespannung notwendigen Wert eingestellt und der Ausgangsstrom des Umrichters erfasst. Die somit ermittelbare Ladeleistung wird auf einen Maximalwert bezüglich eines Stromwertes hin geregelt, der als Strombegrenzungswert von der Signalelektronik vorgegeben wird.

Der Strombegrenzungswert wird hierbei in kleinen Schritten erhöht oder erniedrigt und die dann sich jeweils einstellende Ladeleistung ermittelt. Der jeweils nächste Strombegrenzungswert wird dann derart gewählt, dass der Strombegrenzungswert auf einen derartigen Wert hin verändert wird, dass die Leistung ihren Maximalwert erreicht oder zumindest sehr nahe kommt.

Weiter ist vorteilig, dass auch ein Beladen des Akkumulators dann ermöglicht ist, wenn die Spannung am gleichspannungsseitigen Anschluss des Wechselrichters geringer ist als die Ladespannung. Dies wird erreichbar, indem entsprechende Induktivitäten vorgesehen werden.

Bei einer vorteilhaften Ausgestaltung ist die Spannungsquelle ein Solarmodul oder eine Solarmodulanordnung, wobei die von der Spannungsquelle gelieferte Gleichspannung dem Zwischenkreis des Frequenzumrichters zugeführt wird. Von Vorteil ist dabei, dass die Regelung auf den Maximalwert der Ladeleistung durch den Umrichter ausführbar ist, also nicht direkt der Ausgangsstrom und die Ausgangsspannung der Spannungsquelle erfasst werden muss. Somit ist mit einem industrieüblichen Antriebsumrichter für Elektromotoren sogar eine optimierte Laderegelung für einen Akkumulator ausführbar, da die Erfassung von Ausgangsstrom und die Bestimmung der Ausgangsspannung im Umrichter integriert ist und somit die Laderegelung ohne besonderen Zusatzaufwand auszuführen ist. Es ergibt sich also für einen Antriebsumrichter eine neue Verwendungsmöglichkeit, nämlich als Laderegelung für einen Akkumulator.

Bei einer vorteilhaften Ausgestaltung ist die Spannungsquelle ein Generator, wobei die von der Spannungsquelle gelieferte Wechselspannung einen Gleichrichter des Frequenzumrichters speist, dessen gleichspannungsseitiger Ausgang den Zwischenkreis des Frequenzumrichters speist. Von Vorteil ist dabei, dass auch für ein Windkraftwerk eine Laderegelung des Akkumulators mittels eines Antriebsumrichters realisierbar ist.

Bei einer vorteilhaften Ausgestaltung ist die Wechselspannung eine Drehspannung, und der Gleichrichter jeweils als Gleichrichter für Drehspannung ausgeführt ist. Von Vorteil ist dabei, dass bei hohen Strömen eine gleichgerichtet möglichst wenig einbrechende Spannung als Ladespannung dem Akkumulator zur Verfügung steht.

Bei einer vorteilhaften Ausgestaltung ist ein Mittel zur Bestimmung der Ladespannung vorgesehen, insbesondere am Akkumulator,
**oder es wird aus der Zwischenkreisspannung und dem Pulsweitenmodulationsverhältnis die Ausgangsspannung bestimmt**
und/oder als Mittel zur Bestimmung der Ladespannung wirkt ein Mittel zur Bestimmung der Spannung am gleichspannungsseitigen Anschluss des Wechselrichters zusammen mit einem Mittel zur Bestimmung des Pulsweitenmodulationsverhältnisses, insbesondere indem die Ladespannung aus der Spannung am gleichspannungsseitigen Anschluss und dem Pulsweitenmodulationsverhältnis bestimmt wird, insbesondere durch Multiplikation. Von Vorteil ist dabei, dass eine einfache Bestimmung der Ladespannung ermöglicht ist.

Bei einer vorteilhaften Ausgestaltung wird die ausgangsseitige Wechselspannung des Wechselrichters auf einen einem vorgegebenen Ladespannungswert entsprechenden Wert eingestellt. Von Vorteil ist dabei, dass ein für die Beladung des Akkumulators optimaler Wert einstellbar ist.

Bei einer vorteilhaften Ausgestaltung ist die Ladespannung höher als die am gleichspannungsseitigen Anschluss des Wechselrichters anliegende Spannung. Von Vorteil ist dabei, dass entsprechende Induktivitäten vorsehbar sind und somit sogar ohne besonderen Aufwand eine Spannungsanpassung ausführbar ist. Hierzu ist vorzugsweise ein Ausgangsfilter vorgesehen mit entsprechend angeordneten Induktivitäten.

Wichtige Merkmale bei der Verwendung eines MPP-Tracking-Verfahrens zum Laden eines Akkumulators sind, dass der Akkumulator von einem pulsweitenmoduliert angesteuerten Wechselrichter geladen wird, der aus einer Spannungsquelle gespeist wird,
**wobei der Ausgangsstrom des Wechselrichters auf einen derartigen Stromwert begrenzt wird, dass die Ladeleistung, also das Produkt aus Ladespannung und Ladestrom, auf einen Maximalwert, insbesondere bezüglich des Stromwerts, hin geregelt wird,**
**insbesondere wobei bei Unterschreiten der vorgenannten Stromgrenze die Ausgangsspannung des Wechselrichters derart gestellt wird, dass der Akkumulator von der vorgesehenen Ladespannung gespeist wird,**
**insbesondere wobei die Ladespannung mittels Gleichrichtung und Filterung der Ausgangsspannung des Wechselrichters erzeugt wird.**

Von Vorteil ist dabei, dass ein Antriebsumrichter zur Drehzahlregelung eines Elektromotors verwendbar ist zur Laderegelung in einem Photovoltaik-gespeisten Akkumulator-Ladesystem. Dabei benötigt der Umrichter nur die sowieso bei einem Antriebsumrichter vorhandenen Erfassung des Ausgangsstroms und die Bestimmung der Ausgangsspannung. Dabei ist die Erfassung der Spannung direkt am Ausgangs ausgeführt oder direkt am Zwischenkreis des Umrichters, also am gleichspannungsseitigen Anschluss des Wechselrichters, angeordnet. Im letztgenannten Fall muss der erfasste Spannungswert umgerechnet werden unter Berücksichtigung des jeweiligen Pulsweitenmodulationsverhältnisses des Ansteuersignals für die Halbleiterschalter des Wechselrichters.

Wichtige Merkmale bei dem Verfahren zum Laden eines Akkumulators mittels eines Ladesystems sind, dass das Ladesystem eine Spannungsquelle, einen Umrichter und einen Gleichrichter aufweist,
**wobei** der von der Spannungsquelle gelieferte und/oder getriebene Strom dem gleichspannungsseitigen Anschluss eines Wechselrichters zugeführt wird,
wobei Halbleiterschalter des Wechselrichters pulsweitenmoduliert angesteuert werden zur Erzeugung einer ausgangsseitigen Wechselspannung des Wechselrichters,
wobei die ausgangsseitige Wechselspannung gleichgerichtet wird und die ausgangsseitige, insbesondere gleichgerichtete, Spannung als Ladespannung für den Akkumulator fungiert und/oder wirkt,
wobei der Ausgangsstrom des Wechselrichters erfasst wird, insbesondere im Umrichter, insbesondere wobei der Effektivwert des Ausgangsstroms dem Ladestrom des Umrichters entspricht,
**wobei der Ausgangsstrom des Wechselrichters auf einen derartigen Stromwert begrenzt wird, dass die Ladeleistung, also das Produkt aus Ladespannung und Ladestrom, auf einen Maximalwert hin geregelt wird.**

Von Vorteil ist dabei, dass eine neuartige Verwendung eines Antriebsumrichters ausführbar ist. Außerdem ist die Ausnutzung der speisenden Photovoltaikanlage, insbesondere der speisenden Solarmodule, optimal.

Weitere Vorteile ergeben sich aus den Unteransprüchen.

Die Erfindung wird nun anhand von Abbildungen näher erläutert:

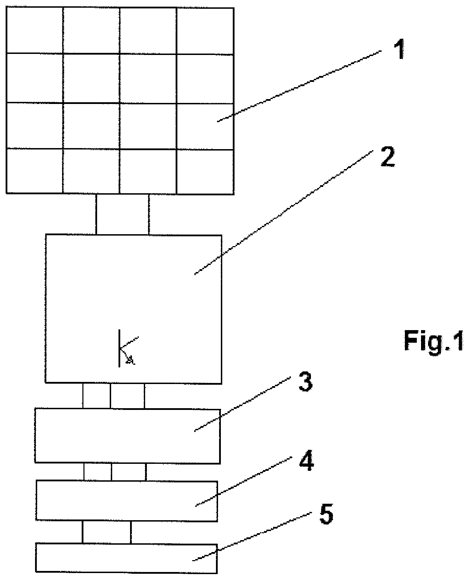

In der Figur 1 ist ein schematischer Aufbau eines erfindungsgemäßen Systems gezeigt.

Hierbei speist ein Solarmodul 1, insbesondere Photovoltaikmodul, die gleichstromseitige Versorgung eines Wechselrichters, insbesondere Zwischenkreis, eines Frequenzumrichters.

Der Wechselrichter umfasst hierbei ansteuerbare Halbleiterschalter, die in Halbbrücken angeordnet sind, so dass ausgangsseitig, also an seinem wechselstromseitigen Anschluss, Wechselspannung, insbesondere Drehspannung erzeugbar ist. Dabei sind drei Halbbrücken vorgesehen, welche jeweils aus zwei in Reihe geschalteten Halbleiterschaltern bestehen. Eine Signalelektronik erzeugt pulsweitenmodulierte Ansteuersignale, welche den Halbleiterschaltern jeweils zugeführt werden. Die Pulsweitenmodulationsfrequenz weist vorzugsweise einen Wert zwischen 1 kHz und 20 kHz auf. Die erzeugte Wechselspannung ist vorzugsweise im Wesentlichen sinusförmig, .

Die vom Wechselrichter erzeugte Wechselspannung wird über einen Filter, insbesondere umfassend Induktivitäten, einem Gleichrichter 4 zugeführt, aus dem ein Akkumulator 5 speisbar ist.

Somit ist die von dem Solarmodul 1 erzeugte Gleichspannung mittels des Wechselrichters 2, insbesondere mittels der pulsweitenmoduliert betriebenen Halbleiterschalter, in eine Drehspannung wandelbar, welche das Filter 3 und über den Gleichrichter 4 dem Akkumulator 5 zugeführt wird. Vorzugsweise ist die Drehspannung sinusförmig und die drei Phasen der Drehspannung weisen eine Phasenverschiebung von etwa 120° bzw. 240° zueinander auf.

Nach Filterung, insbesondere Tiefpassfilterung, durch das Filter 3 und nach Gleichrichtung mittels des Gleichrichters 4 wird die so erzeugte Spannung zum Laden des Akkumulators 5 verwendet.

Der Wechselrichter ist von einem industrieüblichen Antriebsumrichter umfasst, mittels dessen in anderer als der oben geschilderten Verwendung als Ladegerät für einen Akkumulator ein Elektromotor speisbar ist,

Der Wechselrichter ist in einem Gehäuse des Frequenzumrichters vorgesehen, in welchem auch die Signalelektronik des Frequenzumrichters angeordnet ist. Die Signalelektronik umfasst auch eine Regelung und/oder Steuerung. Somit ist auch ein von einem Sensor erfasster Wert der Signalelektronik zuführbar, welche den Wechselrichter abhängig von diesem Wert steuert.

Der Frequenzumrichter ist derart ausgeführt, dass die wechselspannungsseitige Ausgangsspannung U_A und der wechselspannungsseig austretende Strom I_A erfasst wird. Darüber hinaus wird auch die Zwischenkreisspannung U_Z, also unipolare Spannung, erfasst.

Außerdem weist der Umrichter nicht nur den Wechselrichter auf sondern auch einen weiteren Gleichrichter, mit dessen gleichstromseitigem Ausgang der Zwischenkreis in der anderen Verwendung speisbar wäre, wenn dem Gleichrichter an seinem wechselspannungsseitigen Anschluss ein Wechselstrom zugeführt wird, insbesondere ein Drehstrom.

Wenn also der Umrichter als Antriebsumrichter verwendet würde, wäre eine Versorgung des wechselspannungsseitigen Anschlusses mit Wechselstrom, insbesondere Wechselspannung des Versorgungsnetzes, wie beispielsweise des Öffentlichen Versorgungsnetzes, mit beispielsweise 50Hz oder 60 Hz möglich. Diese so zugeführte Wechselspannung würde dann mittels des Gleichrichters in unipolare Spannung umgewandelt und dem Zwischenkreis zugeführt werden, wobei aus dem Zwischenkreis die Halbleiterschalter des Wechselrichters versorgt werden.

Vorteiligerweise ist also der Umrichters entweder als Antriebsumrichter zur Speisung eines Elektromotors verwendbar, der auf diese Weise drehzahlregelbar ist, oder alternativ zur Spannungsumsetzung eines Solarmoduls 1 und/oder Laderegelung eines Akkumulators.

Um die von der Solarmodul 1 erzeugte Leistung optimal auszunutzen, wird in der Signalelektronik aus der am Frequenzumrichter erfassten wechselspannungsseitigen Ausgangsspannung U_A und aus dem wechselspannungsseig austretenden Strom I_A die Ausgangsleistung P_A durch Multiplikation der beiden erfassten Werte bestimmt, also P_A = I_A ^{∗} U_A.

Die Erfassung der Ausgangsspannung U_A erfolgt vorteiligerweise durch Bestimmung aus dem erfassten Wert der Zwischenkreisspannung und dem jeweils aktuellen Pulsweitenmodulationsverhältnis. Insbesondere ergibt die Multiplikation der Zwischenkreisspannung mit der Pulsweite, also dem Tastverhältnis, einen für die Ausgangsspannung hinreichend genauen Wert. In Weiterbildung sind aber auch Korrekturtabellen zusätzlich anwendbar, um eine Feinkorrektur des bestimmten Wertes zu ermöglichen.

Alternativ erfolgt die Erfassung der Ausgangsspannung U_A durch ein Spannungserfassungsmittel direkt am Ausgang des Umrichters oder auch am Anschluss des Akkumulators 5.

Der Umrichter ist in der Lage Spannungswerte zu stellen, die zwischen Null und der Zwischenkreisspannung, also der am gleichspannungsseitigen Anschluss des Wechselrichters anliegenden Spannung, liegen. Ausgangsseitig am Wechselrichter ist vorteiligerweise eine Drehspannung bereit gestellt, die dann durch einen Gleichrichter in die Lade-Gleichspannung gewandelt wird. Der Energiespeicher, insbesondere also Akkumulator, glättet dabei sehr effektiv. Trotzdem ist ein Filter zwischen dem Ausgang des Wechselrichters und dem Eingang des Gleichrichters anordenbar, beispielsweise ein Netzfilter. Die Glättung eines Drehspannungssystems ergibt nach Drehstrom-Gleichrichtung eine sechsfach höhere Restwechselspannungsanteil, da die Drehstromgleichrichtung mittels eines Brückengleichrichters, der drei Halbbrücken von Dioden aufweist, ausgeführt wird. Somit ist eine äußerst geringe Welligkeit der Ladespannung vorhanden.

Die Signalelektronik steuert die Halbleiterschalter des Wechselrichters derart mit pulsweitenmodulierten Signalen an, dass die Ausgangsspannung der Ladespannung des Akkumulators entspricht. Der Ausgangsstrom des Umrichters wird von einem Strombegrenzungsmittel der Signalelektronik auf den Wert I_A begrenzt. Das Strombegrenzungsmittel ist vorzugsweise in einem Regler der Signalelektronik vorgesehen, dessen Ausgangssignal die vom Wechselrichter zu stellende Ausgangsspannung U_A ist.

Beim Laden wird zwar der Stellwert U_A für Spannung vorgegeben, jedoch wirkt zu Beginn des Ladevorgangs bei ungeladenem Energiespeicher die Stromgrenze I_A begrenzend. Erst nach fortgeschrittener Aufladung wird der Stellwert U_A maßgeblich. Somit ist zu Beginn ein stromgeführtes Laden und am Ende ein spannungsgeführtes Laden ausführbar, also ein CV-Verfahren. Alternativ ist auch ein CC-Verfahren ausführbar, das also nur aus verschiedenen Stromgeführten Verfahren besteht.

Des Weiteren umfasst die Signalelektronik einen MPP-Tracker. Dieser gibt dem Strombegrenzungsmittel in jedem Zeitabschnitt einen jeweiligen Strombegrenzungswert I_A derart vor, dass die Leistung P_A auf ihren Maximalwert hingeregelt wird. Abhängig von der Sonneneinstrahlung aufs Solarmodul wird durch Variieren des Strombegrenzungswertes I_A somit jeweils auf die maximale Leistung hingeregelt und der Akkumulator somit die maximal mögliche Ladeleistung für den Akkumulator erreicht.

Die ausgangsseitige Wechselspannung des Wechselrichters wird auf einen einem vorgegebenen Ladespannungswert, insbesondere Ladeschlussspannung des Energiespeichers, entsprechenden Wert eingestellt, **wenn der Strombegrenzungswert vom Ladestrom unterschritten wird.**

Vorteiligerweise wird also das MPP-Tracking beim Laden eines Akkumulators 5 angewendet. Dies hat den Vorteil, dass die Spannungsumsetzung von der vom Solarmodul erzeugten Spannung zu der Ladespannung des Akkumulators beim MPP-Tracking nicht berücksichtigt werden muss. Außerdem ist ein industrieüblicher Antriebsumrichter verwendbar, da bei einem solchen stets die Ausgangsspannung gestellt wird und der Ausgangsstrom des Frequenzumrichters erfasst wird.

Bei einem weiteren erfindungsgemäßen Ausführungsbeispiel ist eine zusätzliche Strombegrenzungsmittel in der Signalelektronik vorgesehen, welches den Ausgangsstrom I_A des Frequenzumrichters auf eine Maximalwert beschränkt, dessen Überschreiten eine Zerstörung des Akkumulators bewirken würde.

Bei einem weiteren erfindungsgemäßen Ausführungsbeispiel erzeugt ein Generator eines Windkraftwerks eine Wechselspannung, welche dem weiteren Gleichrichter des Frequenzumrichters zugeführt wird. Der weitere Gleichrichter erzeugt eine unipolare Spannung, die dem Zwischenkreis zugeführt wird, aus welcher der Wechselrichter gespeist wird, der des Akkumulator über das Filter 3 und den Gleichrichter 4 speist. Somit ist statt aus einem Solarmodul der Akkumulator auch aus einem Windkraftwerk beladbar.

### Bezugszeichenliste

- 1: Solarmodul, insbesondere Photovoltaikmodul
- 2: Frequenzumrichter, insbesondere Wechselrichter
- 3: Filter
- 4: Gleichrichter
- 5: Akkumulator

## Patentansprüche

1. Verfahren zum Laden eines Akkumulators (5) mittels eines Ladesystems,
wobei das Ladesystem eine Spannungsquelle, einen Umrichter mit Wechselrichter (2) und einen Gleichrichter (4) aufweist,
ein von der Spannungsquelle gelieferter Strom einem gleichspannungsseitigen Anschluss des Wechselrichters (2) zugeführt wird,
wobei Halbleiterschalter des Wechselrichters (2) pulsweitenmoduliert angesteuert werden **zum Stellen** einer ausgangsseitigen Wechselspannung des Wechselrichters (2), **aus welcher**
eine **Ladespannung mittels Gleichrichtung durch den Gleichrichter (4) und Filterung der ausgangsseitigen Wechselspannung des Wechselrichters erzeugt wird,**
wobei ein Ausgangsstrom des Wechselrichters (2) im Umrichter erfasst wird, wobei der Effektivwert des Ausgangsstroms einem Ladestrom an einem Ausgang **des** Gleichrichters entspricht,
**dadurch gekennzeichnet, dass**
**der Ausgangsstrom des Wechselrichters (2) mittels eines** Strombegrenzungsmittels **des Umrichters auf einen Strombegrenzungswert begrenzt wird, wobei ein MPP-Tracker** einer **Signalelektronik des Umrichters diesen Stromwert derart stellt, dass die Ladeleistung, also das Produkt aus Ladespannung und Ladestrom, auf einen Maximalwert hin geregelt wird,**
**wobei die** ausgangsseitige **Wechselspannung als Stellgröße dem Strombegrenzungsmittel zugeleitet wird,**
**wobei die ausgangsseitige Wechselspannung des Wechselrichters (2) auf einen einem vorgegebenen Ladespannungswert, insbesondere Ladeschlussspannung des** Akkumulators, **entsprechenden Wert eingestellt wird, wenn der Strombegrenzungswert vom Ladestrom unterschritten wird.**

2. **Verfahren nach Anspruch 1,**
**dadurch gekennzeichnet, dass**
die Spannungsquelle ein Solarmodul oder eine Solarmodulanordnung ist, wobei eine von der Spannungsquelle gelieferte Gleichspannung dem gleichspannungsseitigen Anschluss des Wechselrichters zugeführt wird.

3. **Verfahren** nach mindestens einem der vorangegangenen Ansprüche,
**dadurch gekennzeichnet, dass**
die Spannungsquelle ein Generator ist, wobei eine von der Spannungsquelle gelieferte Wechselspannung einen Gleichrichter des Umrichters speist, dessen gleichspannungsseitiger Ausgang den gleichspannungsseitigen Anschluss des Wechselrichters speist.

4. **Verfahren** nach mindestens einem der vorangegangenen Ansprüche,
**dadurch gekennzeichnet, dass**
die Wechselspannung eine Drehspannung ist, und der Gleichrichter (4) als Gleichrichter (4) für Drehspannung, insbesondere Drehstrom-Brückengleichrichter, ausgeführt ist.

5. **Verfahren** nach mindestens einem der vorangegangenen Ansprüche,
**dadurch gekennzeichnet, dass**
**die Ladespannung bestimmt wird**
- **entweder mittels eines am Akkumulator (5) vorgesehenen Mittels,**
- **oder indem ein Mittel zur Bestimmung der Spannung am gleichspannungsseitigen Anschluss des Wechselrichters (2) zusammenwirkt mit einem Mittel zur Bestimmung des Pulsweitenmodulationsverhältnisses, indem die Ladespannung aus der Spannung am gleichspannungsseitigen Anschluss und dem Pulsweitenmodulationsverhältnis durch Multiplikation bestimmt wird.**

6. **Verfahren** nach mindestens einem der vorangegangenen Ansprüche,
**dadurch gekennzeichnet, dass**
die Ladespannung höher ist als die am gleichspannungsseitigen Anschluss des Wechselrichters (2) anliegende Spannung.

## Claims

1. Method for charging an accumulator (5) by means of a charging system,
wherein the charging system comprises a voltage source, a converter having an inverter (2), and a rectifier (4),
a current supplied by the voltage source is fed to a DC voltage-side terminal of the inverter (2),
wherein semiconductor switches of the inverter (2) are actuated in a pulse-width-modulated manner in order to set an output-side AC voltage of the inverter (2), from which voltage a charging voltage is generated by means of rectification by the rectifier (4) and by filtering the output-side AC voltage of the inverter,
wherein an output current of the inverter (2) is measured in the converter, wherein the effective value of the output current corresponds to a charging current at an output of the rectifier,
**characterised in that**
the output current of the rectifier (2) is limited to a current limit value by means of a current-limiting means of the converter,
wherein an MPP tracker of a signal electronics of the converter sets said current value in such a way that the charging power, i.e. the product of the charging voltage and charging current, is controlled towards a maximum value,
wherein the output-side AC voltage is supplied to the current-limiting means as a manipulated variable,
wherein the output-side AC voltage of the inverter (2) is adjusted to a value that corresponds to a predetermined charging voltage value, in particular the end-of-charge voltage of the accumulator, when the charging current falls below the current limit value.

2. Method according to claim 1,
**characterised in that**
the voltage source is a solar module or a solar module assembly, wherein a DC voltage supplied by the voltage source is fed to the DC voltage-side terminal of the inverter.

3. Method according to at least one of the preceding claims,
**characterised in that**
the voltage source is a generator, wherein an AC voltage supplied by the voltage source feeds a rectifier of the converter, the DC voltage-side output of which feeds the DC voltage-side terminal of the inverter.

4. Method according to at least one of the preceding claims,
**characterised in that**
the AC voltage is a three-phase voltage, and the rectifier (4) is designed as a rectifier (4) for three-phase voltage, in particular as a three-phase current bridge rectifier.

5. Method according to at least one of the preceding claims,
**characterised in that**
the charging voltage is determined
- either by means of a means provided on the accumulator (5),
- or by a means for determining the voltage on the DC voltage-side terminal of the inverter (2) interacting with a means for determining the pulse-width-modulation ratio, with the charging voltage being determined from the voltage at the DC voltage-side terminal and the pulse-width-modulation ratio by multiplication.

6. Method according to at least one of the preceding claims,
**characterised in that**
the charging voltage is greater than the voltage applied to the DC voltage-side terminal of the inverter (2).

## Revendications

1. Procédé pour charger un accumulateur (5) au moyen d'un système de charge,
le système de charge présentant une source de tension, un convertisseur avec onduleur (2) et un redresseur (4),
dans lequel un courant fourni par la source de tension est amené à une borne côté tension continue de l'onduleur (2),
dans lequel des commutateurs à semi-conducteurs de l'onduleur (2) sont commandés par modulation de largeur d'impulsion pour régler une tension alternative côté sortie de l'onduleur (2), à partir de laquelle une tension de charge est générée par redressement à l'aide du redresseur (4) et filtrage de la tension alternative côté sortie de l'onduleur, dans lequel un courant de sortie de l'onduleur (2) est détecté dans le convertisseur, dans lequel la valeur efficace du courant de sortie correspond à un courant de charge à une sortie du redresseur,
**caractérisé en ce que**
le courant de sortie de l'onduleur (2) est limité à une valeur de limitation de courant à l'aide d'un moyen de limitation de courant du convertisseur,
dans lequel un tracker MPP (ou suiveur du point de puissance maximale) d'une électronique de signalisation du convertisseur règle cette valeur de courant de telle sorte que la puissance de charge, c'est-à-dire le produit de la tension de charge et du courant de charge, soit réglée à une valeur maximale,
dans lequel la tension alternative côté sortie est amenée au moyen de limitation de courant en tant que grandeur de réglage,
dans lequel la tension alternative côté sortie de l'onduleur (2) est réglée à une valeur correspondant à une valeur de tension de charge prédéfinie, en particulier la tension de fin de charge de l'accumulateur, lorsque le courant de charge devient inférieur à la valeur de limitation de courant.

2. Procédé selon la revendication 1,
**caractérisé en ce que**
la source de tension est un module solaire ou un ensemble de modules solaires, une tension continue fournie par la source de tension étant amenée à la borne côté tension continue de l'onduleur.

3. Procédé selon au moins l'une des revendications précédentes,
**caractérisé en ce que**
la source de tension est un générateur, une tension alternative fournie par la source de tension alimentant un redresseur du convertisseur, dont la sortie côté tension continue alimente la borne côté tension continue de l'onduleur.

4. Procédé selon au moins l'une des revendications précédentes,
**caractérisé en ce que**
la tension alternative est une tension triphasée et le redresseur (4) est réalisé sous la forme d'un redresseur (4) pour tension triphasée, en particulier d'un pont redresseur triphasé.

5. Procédé selon au moins l'une des revendications précédentes,
**caractérisé en ce que** la tension de charge est déterminée
- soit à l'aide d'un moyen prévu sur l'accumulateur (5),
- soit par le fait qu'un moyen pour déterminer la tension à la borne côté courant continu de l'onduleur (2) coopère avec un moyen pour déterminer le rapport de modulation de largeur d'impulsion, la tension de charge étant déterminée par multiplication à partir de la tension à la borne côté courant continu et du rapport de modulation de largeur d'impulsion.

6. Procédé selon au moins l'une des revendications précédentes,
**caractérisé en ce que**
la tension de charge est supérieure à la tension appliquée à la borne côté tension continue de l'onduleur (2).
